# EUROPEAN PATENT APPLICATION

(11) **EP 4 207 449 A2**
(43) Date of publication of application: **05.07.2023**
(21) Application number: 22217233.0
(22) Date of filing: 29.12.2022
(51) Int. Cl.: H01M 50/204, H01M 50/249, H01M 50/271, H01M 50/289

(54) **RECHARGEABLE BATTERY MODULE AND ELECTRIC VEHICLE AND ENERGY STORAGE SYSTEM USING THE SAME**

(30) Priority: 30.12.2021 KR 20210193103
(71) Applicant: Samsung SDI Co., Ltd., Yongin-si, Gyeonggi-do 17084 (KR)
(72) Inventor: JEON, Jeehoon, 17084 Yongin-si (KR); JEONG, Wun Seok, 17084 Yongin-si (KR); JI, Taeho, 17084 Yongin-si (KR); MOON, Soodeok, 17084 Yongin-si (KR); JUNG, Jungkyun, 17084 Yongin-si (KR); AHN, Janggun, 17084 Yongin-si (KR); RYU, Jaelim, 17084 Yongin-si (KR); YOON, Gwangtaek, 17084 Yongin-si (KR); LEE, Kye Youn, 17084 Yongin-si (KR)
(74) Representative: Marks & Clerk LLP

(57) **Abstract**

An embodiment of the present invention is to provide a rechargeable battery module that may be directly assembled on a dedicated platform of an electric vehicle in a module state and may be easily converted into an energy storage system. An embodiment provides a rechargeable battery module, including: a bottom plate supporting a plurality of cells and having mounting holes at both ends in a length direction thereof; a pair of side plates coupled to both sides of the bottom plate in a width direction; a pair of end plates coupled to the bottom plate and the pair of side plates at both sides of the length direction; a mounting plate that is coupled to the bottom plate and the pair of side plates between the pair of end plates and has a through installation hole through which a mount member penetrates from the outside thereof to allow it to be fastened to a platform of an electric vehicle or a rack of an energy storage system; a top cover disposed and coupled to the pair of side plates, the pair of end plates, and the mounting plate; and a final terminal finally connected to a bus bar connecting electrode terminals of the cells.

## Description

### BACKGROUND OF THE INVENTION

### (a) Field of the Invention

The present invention relates to a rechargeable battery module, and more particularly, to a rechargeable battery module that may be assembled directly in a dedicated platform of an electric vehicle in a module state.

### (b) Description of the Related Art

A rechargeable battery is a battery that is repeatedly charged and discharged, unlike a primary battery. A small-capacity rechargeable battery is used in a portable small electronic device such as a mobile phone, a laptop computer, and a camcorder. A large-capacity and high-density rechargeable battery is used for a power source or energy storage for driving a motor of a hybrid vehicle and an electric vehicle.

As an example, the rechargeable battery includes: an electrode assembly including a positive electrode, a negative electrode, and a separator interposed between the positive and negative electrodes; a case in which the electrode assembly is accommodated; and an electrode terminal electrically connected to the electrode assembly. The rechargeable battery performs charging and discharging through electrochemical reaction between the positive and negative electrodes and an electrolyte solution injected into the inside of the case. The case may have, for example, a cylindrical or rectangular shape to be formed to be suitable for a purpose of use.

The rechargeable battery may be used as a rechargeable battery module including a plurality of unit battery cells connected in series and/or in parallel to be able to drive a motor of a hybrid vehicle, as an example, that requires a relatively high energy density. For example, the rechargeable battery module is formed by connecting electrode terminals of a plurality of unit battery cells provided in a number corresponding to a desired amount of power to each other in order to realize a relatively high power rechargeable battery module (for example, for an electric vehicle).

As an example, the rechargeable battery module is configured of a unit product, by stacking a plurality of cells, mounting and assembling them in a housing structure together with related parts, and then electrically connecting them in series and/or parallel. There are various manufacturing methods of rechargeable battery modules for each cell type and each manufacturer, and the rechargeable battery modules are connected again in series and/or parallel to form a rechargeable battery pack.

Typically, a rechargeable battery module is made of a rechargeable battery pack and assembled in an electric vehicle. Therefore, in order to facilitate assembly and separation of the rechargeable battery module, many ideas are derived and the structure of the rechargeable battery pack is being improved. However, since the rechargeable battery module is positioned inside the rechargeable battery pack, in order to assemble and maintain the rechargeable battery module, it is necessary to separate the rechargeable battery pack from the electric vehicle and disassemble the rechargeable battery pack again.

Therefore, a lot of effort is required in terms of assembly or maintenance of the rechargeable battery, and the rechargeable battery module has a structure that may be easily converted to an energy storage system at 70 to 80% of a state of health (SOH) of the electric vehicle.

The above information disclosed in this Background section is only for enhancement of understanding of the background of the invention, and therefore it may contain information that does not form the prior art that is already known in this country to a person of ordinary skill in the art.

### SUMMARY OF THE INVENTION

An embodiment of the present invention is to provide a rechargeable battery module that may be directly assembled in a dedicated platform of an electric vehicle in a module state. In addition, an embodiment of the present invention is to provide a rechargeable battery module that may be easily converted to an energy storage system in an electric vehicle. In addition, an embodiment of the present invention is to provide an electric vehicle and an energy storage system to which the rechargeable battery module is applied.

An embodiment of the present invention provides a rechargeable battery module, including: a bottom plate supporting a plurality of cells and having mounting holes at both ends in a length direction thereof; a pair of side plates coupled to both sides of the bottom plate in a width direction; a pair of end plates coupled to the bottom plate and the pair of side plates at both sides of the length direction; a mounting plate that is coupled to the bottom plate and the pair of side plates between the pair of end plates and has a through installation hole through which a mount member penetrates from the outside thereof to allow it to be fastened to a platform of an electric vehicle or a rack of an energy storage system; a top cover disposed and coupled to the pair of side plates, the pair of end plates, and the mounting plate; and a final terminal finally connected to a bus bar connecting electrode terminals of the cells.

The final terminal may be drawn out of a lower side of the bottom plate.

The bottom plate may include: a plate-shaped support part supporting the plurality of cells; and a buffer part that forms a buffer space at the outside of the support part and is connected to the support part.

The bottom plate may include a protrusion protruding in the width direction; the side plate may include a coupling groove coupled to the protrusion, and further includes a flange part surrounding a lower surface of the bottom plate; and the flange part may be fastened to the bottom plate with a fastening member.

The final terminal may include: a first connecting member connected to the bus bar and bent toward the bottom plate; and a second connecting member exposed to the outside of the bottom plate and installed through the bottom plate to be electrically connected to the first connecting member.

The second connecting member may be provided with a female coupling part at an inner end thereof; and the first connecting member may be provided with a male coupling part that is coupled to the female coupling part to be electrically connected to it.

The female coupling part and the male coupling part may be laser welded in a state of being coupled to each other.

The mounting plate may be fixedly coupled by a coupling member coupled to a groove respectively formed on an upper surface of the bottom plate and a lower surface of the mounting plate facing the upper surface, and may be fastened to a fastening member penetrating the side plate.

The mount member may be installed below the platform or at a side of the rack by penetrating the mounting plate and the top cover.

The end plate may be disposed on the bottom plate at a lower end thereof, may be fastened to a fastening member penetrating the side plate, and may be disposed outside the inner member and the outer member coupled to each other.

The end plate may include a vent that discharges gas from an inner space set by the bottom plate, the pair of side plates, the pair of end plates, and the top cover during a cell event.

The vent may include: a housing installed on the end plate and having an outlet formed at a center thereof; and a cap coupled to the outside of the housing to be opened by a gas pressure of the inner space.

The rechargeable battery module may further include: a cooling fluid connecting passage installed at both ends of the side plate so as to be connected to a cooling channel provided in the pair of side plates; and a cooling fluid port connected to the cooling fluid connecting passage and installed outside the bottom plate to supply and discharge a cooling fluid.

Another embodiment of the present invention provides an electric vehicle including: a plurality of rechargeable battery modules raised from a lower portion of a platform of the electric vehicle to be mounted on the platform by mount members at both ends in a length direction; and a cooling pipe connecting cooling fluid ports provided below the rechargeable battery module to each other.

The electric vehicle may further include a protection plate that covers the cooling pipe and the plurality of rechargeable battery modules below the cooling pipe and is mounted on the platform.

Another mount member may penetrate a through installation hole provided in a mounting plate of the rechargeable battery module from below to be fastened to the platform.

Another embodiment of the present invention provides an energy storage system, including: a rack of the energy storage system; and a plurality of rechargeable battery modules moved from a side of the rack to be mounted on the rack by mount members at both ends in a length direction.

Another mount member may penetrate a through installation hole provided in a mounting plate of the rechargeable battery module from a side thereof to be further fastened to the rack.

At least some of the above and other features of the invention are set out in the claims.

Since the rechargeable battery module of the embodiment has a mounting hole in a bottom plate and a through installation hole in a mounting plate, the rechargeable battery module may be directly assembled and mounted on a platform by a mount member passing through the mounting hole and the through installation hole in a state of being raised from a lower portion of the platform of an electric vehicle. That is, the rechargeable battery module may be directly assembled in and detached from the platform of the electric vehicle in a module state.

In addition, since the rechargeable battery module of the embodiment has a mounting hole in a bottom plate and a through installation hole in a mounting plate, the rechargeable battery module may be detached from an electric vehicle at the end of its service life and directly assembled and mounted on a rack by a mount member passing through the mounting hole and the through installation hole in a state that it is moved from a side of the rack of an energy storage system. That is, the rechargeable battery module may be detached from the platform of the electric vehicle in a module state, and may be directly assembled in and detached from the rack of the energy storage system.

### BRIEF DESCRIPTION OF THE DRAWINGS

FIG. 1 illustrates an exploded perspective view of a rechargeable battery module according to an embodiment of the present invention.
FIG. 2 illustrates a perspective view of assembling a rechargeable battery module of FIG. 1.
FIG. 3 illustrates an exploded partial perspective view of a final terminal.
FIG. 4 illustrates a partial perspective view of assembling a final terminal and an end plate.
FIG. 5 illustrates a partial perspective view of a final terminal viewed from a lower portion thereof.
FIG. 6 illustrates a bottom view of assembling the rechargeable battery module of FIG. 1.
FIG. 7 illustrates a partial perspective view of a mounting plate in the rechargeable battery module of FIG. 1.
FIG. 8 illustrates a cross-sectional view taken along line VIII-VIII of FIG. 7.
FIG. 9 illustrates a partial perspective view of an end plate in the rechargeable battery module of FIG. 1.
FIG. 10 illustrates a cross-sectional view taken along line X-X of FIG. 9.
FIG. 11 illustrates a cross-sectional view taken along line XI-XI of FIG. 2.
FIG. 12 illustrates a bottom view of an electric vehicle installed with a rechargeable battery module according to an embodiment of the present invention.
FIG. 13 illustrates a bottom view in which cooling fluid ports are formed downward of a rechargeable battery module in FIG. 12.
FIG. 14 illustrates an exploded partial perspective view of a cooling fluid pipe connected to the cooling fluid ports of FIG. 12.
FIG. 15 illustrates a partial perspective view of a state before a protection plate installed below the cooling fluid pipe of FIG. 14 is fastened.
FIG. 16 illustrates a perspective view of an energy storage system installed with a rechargeable battery module according to an embodiment of the present invention.

### DETAILED DESCRIPTION OF THE EMBODIMENTS

The present invention will be described more fully hereinafter with reference to the accompanying drawings, in which embodiments of the invention are shown. As those skilled in the art would realize, the described embodiments may be modified in various different ways, all without departing from the scope of the present invention. The drawings and description are to be regarded as illustrative in nature and not restrictive. Like reference numerals designate like elements throughout the specification.

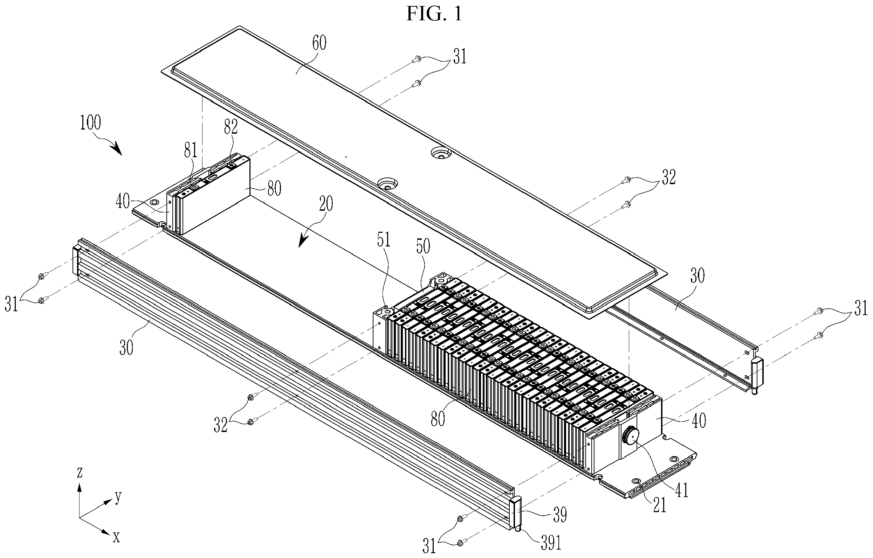

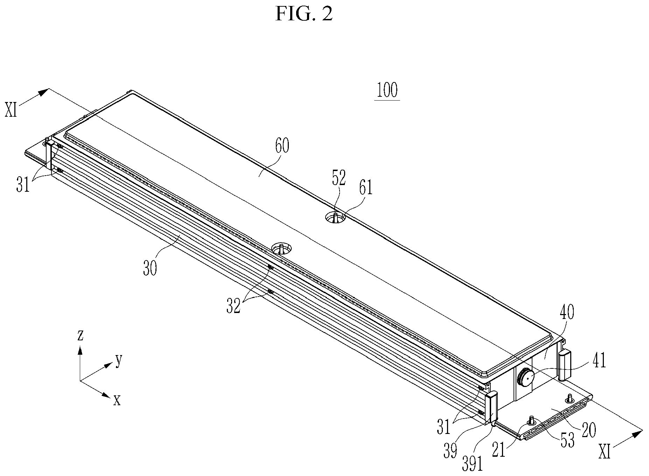

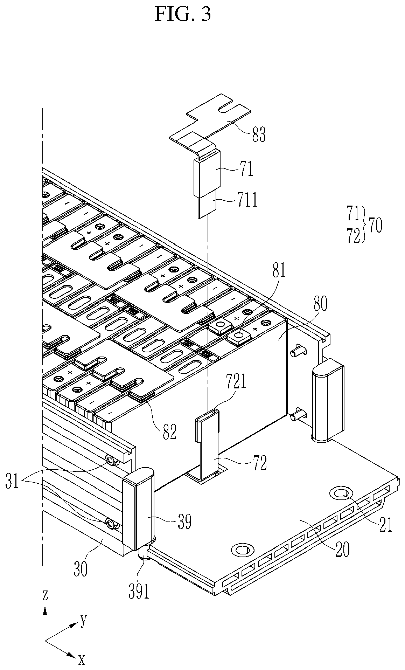

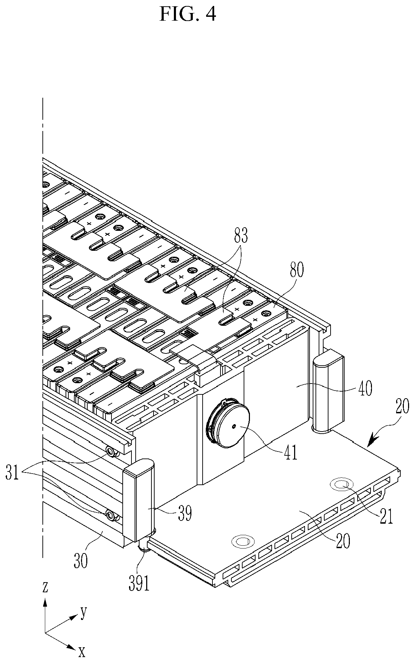

FIG. 1 illustrates an exploded perspective view of a rechargeable battery module according to an embodiment of the present invention, FIG. 2 illustrates a perspective view of assembling a rechargeable battery module of FIG. 1, FIG. 3 illustrates an exploded partial perspective view of a final terminal, and FIG. 4 illustrates a partial perspective view of assembling a final terminal and an end plate.

Referring to FIG. 1 to FIG. 4, a rechargeable battery module 100 of an embodiment includes a bottom plate 20, a side plate 30, an end plate 40, a mounting plate 50, a top cover 60, and a final terminal 70.

The bottom plate 20 supports a plurality of cells 80 configured of a rechargeable battery, and has mounting holes 21 at both ends thereof in a length direction (an x-axis direction). The bottom plate 20 sets a length of the rechargeable battery module 100 in the x-axis direction.

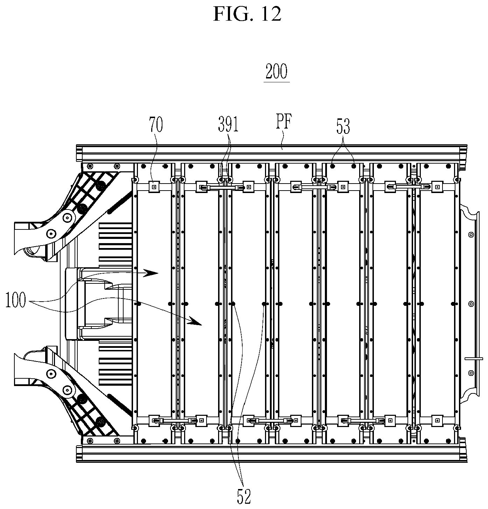

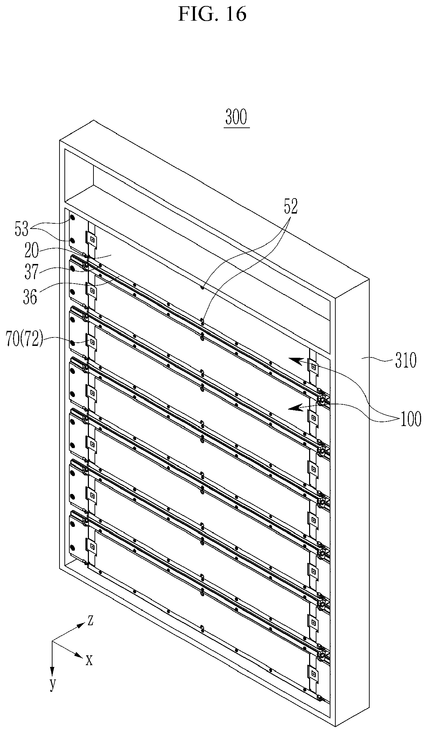

Since the bottom plate 20 is fastened to a platform PF (see FIG. 12) of an electric vehicle 200 or a rack 310 (see FIG. 16) of an energy storage system 300 through the mounting hole 21, the rechargeable battery module 100 is assembled to the platform PF or the rack 310.

The side plates 30 are provided as a pair, and are coupled to both sides of the bottom plate 20 in a width direction (a y-axis direction). The side plate 30 sets a height of the rechargeable battery module 100 in a z-axis direction.

The end plates 40 are provided as a pair, and are disposed on an upper surface of the bottom plate 20 at both sides of the bottom plate 20 in the length direction (x-axis direction) to be disposed and coupled between the pair of side plates 30. That is, the side plate 30 is coupled to the end plate 40 with a fastening member 31.

The mounting plate 50 is disposed between the pair of end plates 40 on the upper surface of the bottom plate 20 to be disposed and coupled between the pair of side plates 30. That is, the side plate 30 is coupled to the mounting plate 50 with a fastening member 32.

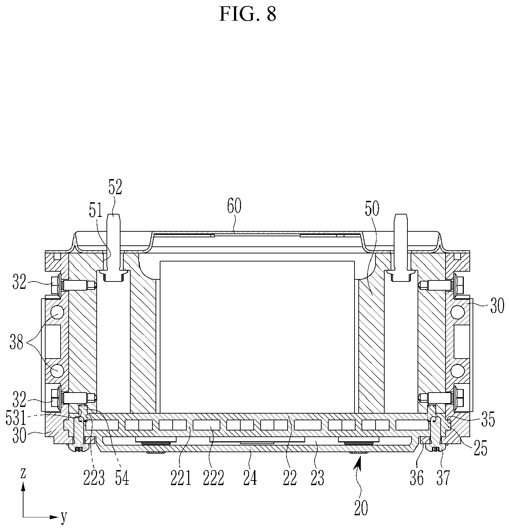

The mounting plate 50 has a through installation hole 51 penetrating in the z-axis direction, so that a mounting member 52 (see FIG. 8) is penetrated outside the rechargeable battery module 100, that is, below the bottom plate 20 to be fastened to the platform PF of the electric vehicle 200 or the rack 310 of the energy storage system 300.

The mounting plate 50 is provided to prevent sagging of the bottom plate 20 from occurring because the length of the rechargeable battery module 100 is increased, and in the present embodiment, it is provided at a center of the length in the x-axis direction. One or a plurality of mounting plates 50 (not shown) may be provided according to the length of the rechargeable battery module 100.

The top cover 60 is disposed and coupled on the pair of side plates 30, the pair of end plates 40, and the mounting plate 50. The top cover 60 is provided with a through hole 61 corresponding to the through installation hole 51 of the mounting plate 50, enabling penetration of the mount member 52.

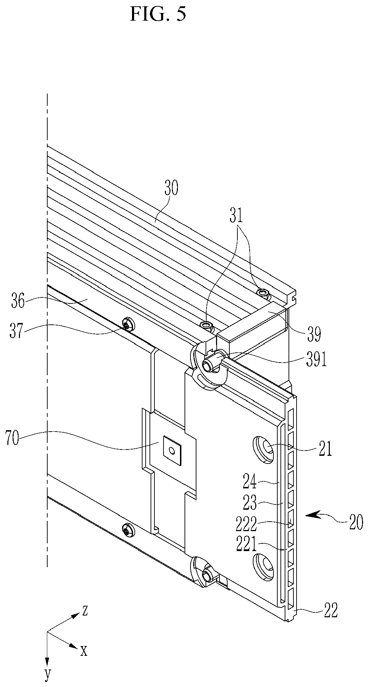

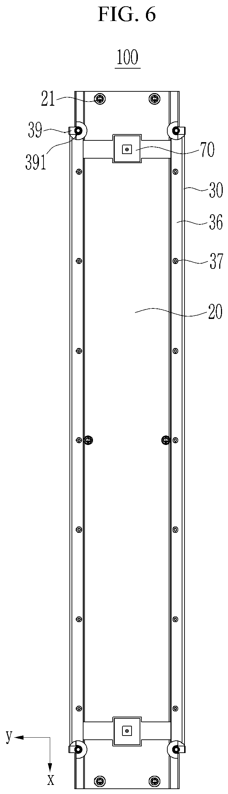

FIG. 5 illustrates a partial perspective view of a final terminal viewed from a lower portion thereof, and FIG. 6 illustrates a bottom view of assembling the rechargeable battery module of FIG. 1. Referring to FIG. 3 to FIG. 6, the final terminal 70 is finally connected to a bus bar 83 connecting electrode terminals 81 and 82 of the cells 80. The final terminal 70 is drawn out of a lower side of the bottom plate 20.

As an example, the final terminal 70 includes a first connecting member 71 and a second connecting member 72. The first connecting member 71 is connected to the bus bar 83, and is bent downward toward the bottom plate 20. The second connecting member 72 is exposed to the outside of the bottom plate 20, and is installed through the bottom plate 20 to be electrically connected to the first connecting member 71.

As an example, the second connecting member 72 includes a female coupling part 721 at an inner end thereof, and the first connecting member 71 includes a male coupling part 711 coupled to the female coupling part 721 to be electrically connected thereto. The female coupling part 721 and the male coupling part 711 may be laser welded while being coupled to each other.

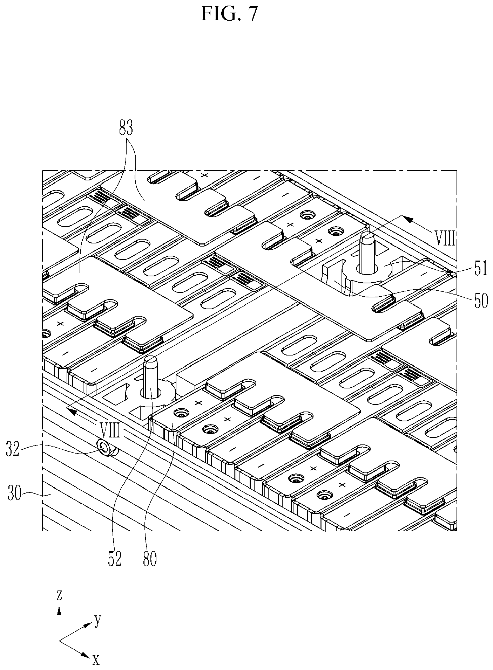

FIG. 7 illustrates a partial perspective view of a mounting plate in the rechargeable battery module of FIG. 1, and FIG. 8 illustrates a cross-sectional view taken along line VIII-VIII of FIG. 7. Referring FIG. 7 and FIG. 8, the mounting plate 50 is fixed by a coupling member 54 and is coupled in a vertical direction, wherein the coupling member 54 is coupled to grooves 223 and 531 respectively formed on an upper surface of the bottom plate 20 and a lower surface thereof facing the upper surface. In addition, the mounting plate 50 is fastened to the fastening member 32 passing through the side plate 30.

As an example, the bottom plate 20 includes a plate-shaped support part 22 supporting the plurality of cells 80, and a buffer part 24 that forms a buffer space 23 at the outside of the support part 22 and is connected to the support part 22.

In addition, the support part 22 further includes a buffer space 222 partitioned by a partition wall 221 extending in the x-axis direction. Accordingly, the bottom plate 20 is formed in a stacked structure of the buffer part 24 of a lowermost side, the buffer space 23, the partition wall 221, the buffer space 222, and the support part 22.

The buffer part 24 forms a safety zone for protecting the electric vehicle 200 from an impact of a lower portion thereof through the buffer space 23. The buffer part 24 makes it possible to minimize cell damage at the bottom of the rechargeable battery module 100 when a structure of a protection plate 120 to be described later collapses due to the lower impact.

The bottom plate 20 includes a protrusion 25 that protrudes in the width direction (y-axis direction) and extends in the length direction (x-axis direction), and the side plate 30 includes a coupling groove 35 coupled to the protrusion 25 and further includes a flange part 36 surrounding a lower surface thereof. The flange part 36 is fastened to the bottom plate 20 with a fastening member 37. Accordingly, the side plate 30 is firmly coupled while surrounding the bottom plate 20 at both sides of the bottom plate 20 in the width direction.

The mount member 52 is installed below the platform PF or at a side of the rack 310 through the through-hole 51 of the mounting plate 50 and the through-hole 61 of the top cover 60. The mount member 52 is formed of a bolt to be screwed to the platform PF or the rack 310 via the through installation hole 51 and the through hole 61, thereby assembling the rechargeable battery module 100 to the electric vehicle 200 or the energy storage system 300.

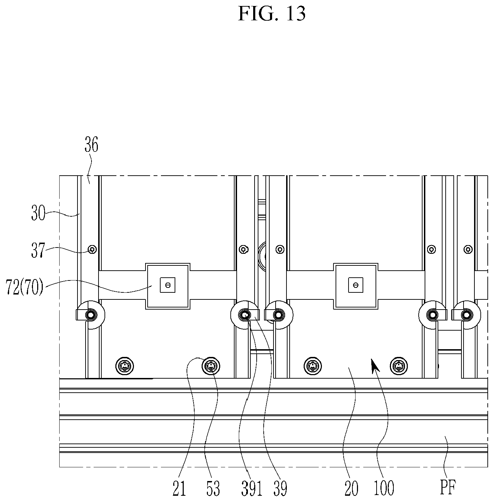

At the same time, another mounting member 53 is screwed to the platform PF or the rack 310 via the mounting hole 21, so that the rechargeable battery module 100 is assembled and installed in the electric vehicle 100 or the energy storage system 300 (see FIG. 13 and FIG. 16).

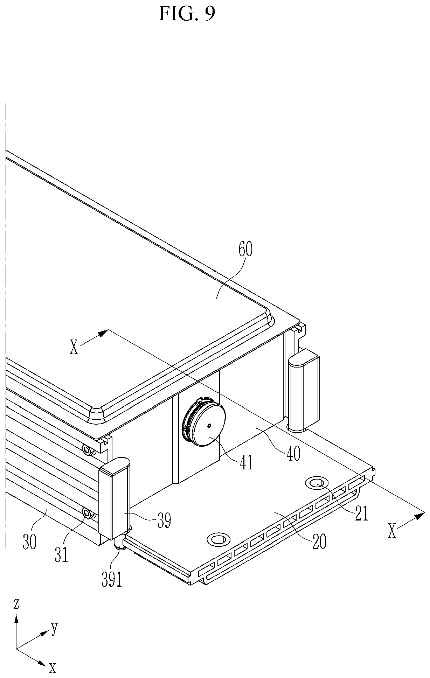

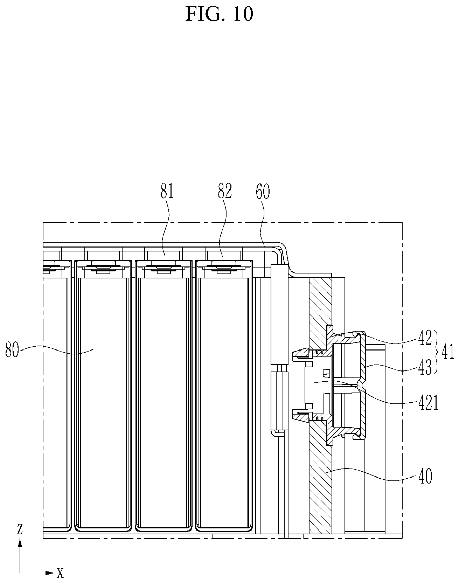

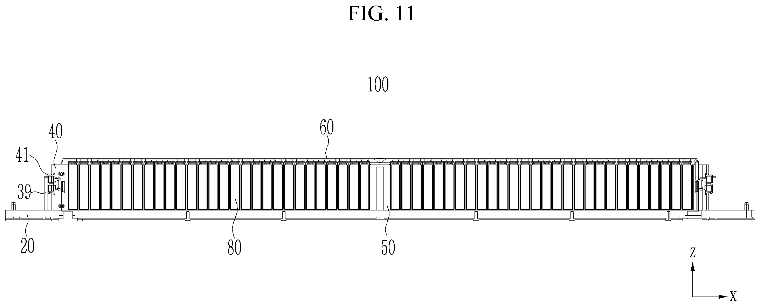

FIG. 9 illustrates a partial perspective view of an end plate in the rechargeable battery module of FIG. 1, FIG. 10 illustrates a cross-sectional view taken along line X-X of FIG. 9, and FIG. 11 illustrates a cross-sectional view taken along line XI-XI of FIG. 2.

Referring to FIG. 1, FIG. 4, and FIG. 9 to FIG. 11, a lower portion of the end plate 40 is disposed on the bottom plate 20, is fastened to the fastening member 31 penetrating the side plate 30, and is disposed on the outside of the final terminal 70 formed by the first connecting member 71 and the second connecting member 72 coupled to each other.

The end plate 40 includes a vent 41 for discharging a gas from an inner space set by the bottom plate 20, the pair of side plates 30, the pair of end plates 40, and the top cover 60 during a cell event.

The vent 41 includes a housing 42 and a cap 43. The housing 42 is installed through the end plate 40, and has an outlet 421 at a center thereof. The cap 43 is coupled to the outside of the housing 42 to open the outlet 421 by a gas pressure of the inner space to quickly discharge gas generated during an event to the outside, thereby preventing secondary accidents.

Referring back to FIG. 8 and FIG. 9, the pair of side plates 30 are provided with a cooling channel 38 for cooling the cells 80 by circulating a cooling fluid. The rechargeable battery module 100 includes a cooling fluid connecting passage 39 connected to the cooling channel 38 at both ends of the side plate 30, and further includes a cooling fluid port 391 connected to the cooling fluid connecting passage 39.

The cooling fluid port 391 is installed in a downward direction, that is, outward from the bottom plate 20, to be able to supply and discharge the cooling fluid. Accordingly, the assembly of a cooling pipe 110 to the cooling fluid port 391 is facilitated.

In addition, since the assembly direction of the cooling pipe 110 is the z-axis direction that rises from the lower portion of the electric vehicle 200, it is easy to detach and attach the cooling pipe 110, and leakage of the cooling fluid that may occur at a fastening portion with the cooling fluid port 381 falls downward. That is, the cooling fluid port 391 and the cooling pipe 110 do not affect the cell 80 due to a leakage of the cooling fluid.

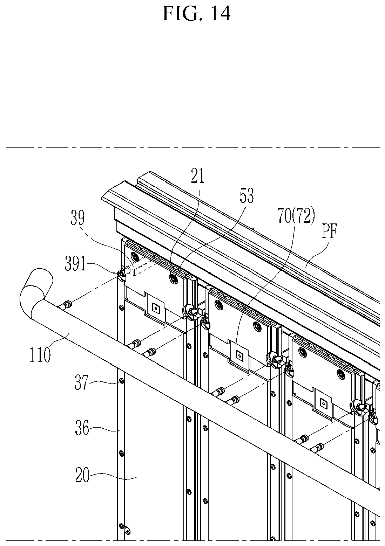

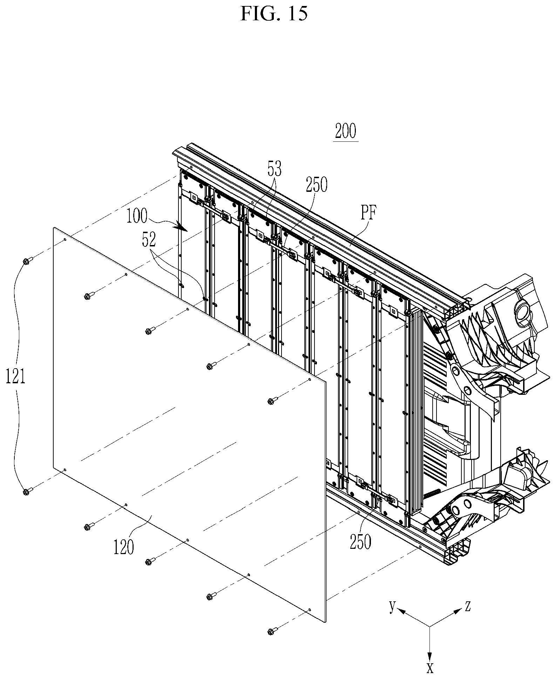

FIG. 12 illustrates a bottom view of an electric vehicle installed with a rechargeable battery module according to an embodiment of the present invention, FIG. 13 illustrates a bottom view in which cooling fluid ports are formed downward of a rechargeable battery module in FIG. 12, FIG. 14 illustrates an exploded partial perspective view of a cooling fluid pipe connected to the cooling fluid ports of FIG. 12, and FIG. 15 illustrates a partial perspective view of a state before a protection plate installed below the cooling fluid pipe of FIG. 14 is fastened.

Referring to FIG. 12 to FIG. 15, the electric vehicle 200 in which the rechargeable battery module 100 of the embodiment is assembled and mounted is disclosed. The electric vehicle 200 of the embodiment includes the plurality of rechargeable battery modules 100 and the cooling pipe 110 that are raised from the lower portion of the platform PF to be mounted on the platform PF.

The cooling pipe 110 connects the cooling fluid ports 391 provided below the rechargeable battery module 100 to each other so that the cooling fluid may be discharged to one side thereof.

The electric vehicle 200 further includes the protection plate 120. The protection plate 120 covers the cooling pipe 110 and the plurality of rechargeable battery modules 100 below the cooling pipe 110, and is mounted on the platform PF with a fastening member 121.

The electric vehicle 200 includes the mount member 52 that penetrates the through installation hole 51 provided in the mounting plate 50 of the rechargeable battery module 100 from below and is fastened to the platform PF. The protection plate 120 is mounted on the platform PF after the rechargeable battery module 100 is installed with the mount member 52.

Accordingly, the protection plate 120 is positioned below the electric vehicle 200 and protects a connecting bus bar 250 and the cooling pipe 110 connecting the rechargeable battery modules 100. The protection plate 120 primarily serves to protect the lower portion of the electric vehicle 200.

FIG. 16 illustrates a perspective view of an energy storage system installed with a rechargeable battery module according to an embodiment of the present invention. Referring to Fig. 16, the energy storage system 300 in which the rechargeable battery module 100 of the embodiment is assembled and mounted is disclosed. The energy storage system 300 of the embodiment includes the rack 310, and the plurality of rechargeable battery modules 100 mounted to the rack 310 by moving from the side of the rack 310.

The plurality of rechargeable battery module 100 are separated from the platform PF in a state of 70-80% of the state of health (SOH) that the cycle-life of the electric vehicle 200 is exhausted, and then may be installed and used in the rack 310. The rechargeable battery module 100 is mounted and used below the platform PF of the electric vehicle 200, and then it may be separated downward to be moved and mounted to the side of the rack 310 of the energy storage system 300 to be used.

While this invention has been described in connection with what is presently considered to be practical embodiments, it is to be understood that the invention is not limited to the disclosed embodiments, but, on the contrary, is intended to cover various modifications and equivalent arrangements included within the scope of the appended claims.

**<Description of symbols>**

| | |
|---|---|
| 20: bottom plate | 22: support part |
| 23: buffer Space | 24: buffer part |
| 25: protrusion | 30: side plate |
| 21: mounting hole | 31, 32, 37, 121: fastening member |
| 35: coupling groove | 36: flange part |
| 38: cooling channel | 39: cooling fluid connecting passage |
| 40: end plate | 41: vent |
| 42: housing | 43: cap |
| 50: mounting plate | 51: through installation hole |
| 52: mount member | 53: mount member |
| 54: coupling member | 60: top cover |
| 61: through-hole | 70: final terminal |
| 71, 72: first and second connecting members | |
| 80: cell | |
| 81, 82: electrode terminal | 83: bus bar |
| 100: rechargeable battery module | |
| 110: cooling pipe | |
| 120: protection plate | 200: electric vehicle |
| 221: partition wall | 222: buffer space |
| 223, 531: groove | 250: connecting bus bar |
| 300: energy storage system | 310: rack |
| 391: cooling fluid port | 421: outlet |
| 711: male coupling part | 721: female coupling part |
| PF: platform | |

## Claims

1. A rechargeable battery module, comprising:
a bottom plate supporting a plurality of cells and having mounting holes at both ends in a length direction thereof;
a pair of side plates coupled to both sides of the bottom plate in a width direction;
a pair of end plates coupled to the bottom plate and the pair of side plates at both sides of the length direction;
a mounting plate that is coupled to the bottom plate and the pair of side plates between the pair of end plates and has a through installation hole through which a mount member penetrates from the outside thereof to allow it to be fastened to a platform of an electric vehicle or a rack of an energy storage system;
a top cover disposed and coupled to the pair of side plates, the pair of end plates, and the mounting plate; and
a final terminal connected to a bus bar connecting electrode terminals of the cells.

2. The rechargeable battery module of claim 1, wherein
the final terminal is drawn out of a lower side of the bottom plate.

3. The rechargeable battery module of claim 1 or claim 2, wherein the bottom plate includes:
a plate-shaped support part supporting the plurality of cells; and
a buffer part that forms a buffer space at the outside of the support part and is connected to the support part.

4. The rechargeable battery module of claim 3, wherein:
the bottom plate includes a protrusion protruding in the width direction;
the side plate includes a coupling groove coupled to the protrusion, and further includes a flange part surrounding a lower surface of the bottom plate; and
the flange part is fastened to the bottom plate with a fastening member.

5. The rechargeable battery module of any one of claims 1 to 4, wherein
the final terminal includes:
a first connecting member connected to the bus bar and bent toward the bottom plate; and
a second connecting member exposed to the outside of the bottom plate and installed through the bottom plate to be electrically connected to the first connecting member.

6. The rechargeable battery module of claim 5, wherein:
the second connecting member is provided with a female coupling part at an inner end thereof; and
the first connecting member is provided with a male coupling part that is coupled to the female coupling part to be electrically connected to it, optionally wherein:
the female coupling part and the male coupling part are laser welded in a state of being coupled to each other.

7. The rechargeable battery module of claim 5 or claim 6, wherein
the mounting plate
is fixedly coupled by a coupling member coupled to a groove respectively formed on an upper surface of the bottom plate and a lower surface of the mounting plate facing the upper surface, and
is fastened to a fastening member penetrating the side plate.

8. The rechargeable battery module of any one of claims 5 to 7, wherein
the mount member is installed below the platform or at a side of the rack by penetrating the mounting plate and the top cover.

9. The rechargeable battery module of any one of claims 5 to 8, wherein
the end plate
is disposed on the bottom plate at a lower end thereof,
is fastened to a fastening member penetrating the side plate, and
is disposed outside the first connecting member and the second connecting member coupled to each other.

10. The rechargeable battery module of claim 9, wherein
the end plate includes a vent that discharges a gas from an inner space set by the bottom plate, the pair of side plates, the pair of end plates, and the top cover during a cell event, optionally wherein
the vent includes:
a housing installed on the end plate and having an outlet formed at a center thereof; and
a cap coupled to the outside of the housing to be opened by a gas pressure of the inner space.

11. The rechargeable battery module of any one of claims 1 to 10, further comprising:
a cooling fluid connecting passage installed at both ends of the side plate so as to be connected to a cooling channel provided in the pair of side plates; and
a cooling fluid port connected to the cooling fluid connecting passage and installed outside the bottom plate to supply and discharge a cooling fluid.

12. An electric vehicle comprising:
a plurality of rechargeable battery modules raised from a lower portion of a platform of the electric vehicle to be mounted on the platform by mount members at both ends in a length direction; and
a cooling pipe connecting cooling fluid ports provided below the rechargeable battery module to each other.

13. The electric vehicle of claim 12, wherein:
(i) the electric vehicle further comprises
a protection plate that covers the cooling pipe and the plurality of rechargeable battery modules below the cooling pipe and is mounted on the platform; and/or
(ii) another mount member penetrates a through installation hole provided in a mounting plate of the rechargeable battery module from below to be fastened to the platform.

14. An energy storage system, comprising:
a rack of the energy storage system; and
a plurality of rechargeable battery modules moved from a side of the rack to be mounted on the rack by mount members at both ends in a length direction.

15. The energy storage system of claim 14, wherein
another mount member penetrates a through installation hole provided in a mounting plate of the rechargeable battery module from a side thereof to be further fastened to the rack.
